**Europäisches Patentamt**

**European Patent Office**

**Office européen des brevets**

(19)

(11) Veröffentlichungsnummer: **0 030 655
B1**

(12)

# EUROPÄISCHE PATENTSCHRIFT

(45) Veröffentlichungstag der Patentschrift:
**06.02.85**

(51) Int. Cl.⁴: **C 03 B 9/193**, C 03 B 9/14

(21) Anmeldenummer: **80107335.4**

(22) Anmeldetag: **25.11.80**

(54) **Vorrichtung zur Herstellung von Hohlglasartikeln.**

(30) Priorität: **14.12.79 DE 2950280**

(43) Veröffentlichungstag der Anmeldung:
**24.06.81 Patentblatt 81/25**

(45) Bekanntmachung des Hinweises auf die Patenterteilung:
**06.02.85 Patentblatt 85/6**

(84) Benannte Vertragsstaaten:
**AT BE CH FR GB IT LI LU NL SE**

(56) Entgegenhaltungen:
**DE - A - 2 836 682
US - A - 1 745 794
US - A - 1 837 164
US - A - 1 986 919
US - A - 4 152 133**

(73) Patentinhaber: **VEBA-GLAS Aktiengesellschaft,
Ruhrglasstrasse 50, D-4300 Essen 12 (DE)**

(72) Erfinder: **Hüllen, Helmut, Dreilindenstrasse 93,
D-4300 Essen (DE)**
Erfinder: **Knoth, Werner-Dieter, Byfanger Strasse 175,
D-4300 Essen (DE)**

(74) Vertreter: **Spalthoff, Adolf, Dipl.-Ing. et al,
Pelmanstrasse 31 P.O. Box 34 02 20,
D-4300 Essen 1 (DE)**

ACTORUM AG

**Beschreibung**

Die Erfindung betrifft eine Vorrichtung zur Herstellung von Hohlglasartikeln mit mehreren, linear hintereinander angeordneten Fertigungsstationen, sog. IS-Maschine, die jeweils eine oder mehrere feststehende Vorformen aufweisen, denen jeweils zwei Fertigformen zugeordnet sind, welche sich auf einem Drehteller um 180° zueinander versetzt befinden und abwechselnd in eine Übernahmeposition für den Rohling (Külbel) und eine Entnahmeposition für den fertigen Formling bewegbar sind, und bei der oberhalb jeder Fertigform ein mit einer Über- oder Unterdruckquelle in Verbindung stehender, an einem Tragarm befestigter heb- und senkbarer Kopf angeordnet ist.

Eine derartige Vorrichtung ist Gegenstand der EP-A-0 027 830. Je nach Stellung des Drehtellers wird dann entweder der eine oder der andere Fertigformkomplex zur Füllung mit dem bzw. den Rohlingen oder zur Entnahme des bzw. der fertig ausgebildeten Hohlglaskörper eingesetzt. Das Ausblasen oder Evakuieren geschieht in der Weise, dass in der Entnahmelage des Fertigformkomplexes, d.h. also nachdem das Schwenken um 180° von der Aufnahmeposition der Rohlinge durchgeführt ist, ein oder mehrere Köpfe auf die einzelnen Fertigformen aufgesetzt wird bzw. werden. Hierbei erweist es sich jedoch als nachteilig, dass der Vorgang des Ausblasens oder Evakuierens zeitlich und örtlich festgelegt und beschränkt ist.

Von diesem Stand der Technik gemäss Art. 54 (3) EPÜ ausgehend, liegt der Erfindung die Aufgabe zugrunde, eine Vorrichtung der eingangs genannten Art dahingehend zu verbessern, dass das Ausblasen und/oder Evakuieren in der Fertigform bzw. in den Fertigformen bereits während des Schwenkens bzw. Drehens des Drehtellers mit den doppelt vorhandenen, auf diesem befindlichen Fertigformkomplexen erfolgen können.

Gemäss der Erfindung wird dies dadurch erreicht, dass die Drehachse des Drehtellers diese nach oben überragt und in dem Bereich ihres frei vorragenden Endes ein oder zwei Tragarm(e) vorgesehen ist bzw. sind, welche(r) auf der Drehachse heb- und senkbar sowie drehbar angebracht ist bzw. sind, wobei die Dreh- bzw. Schwenkbewegungen der Tragarme und deren Heb- und Senkbewegungen derart gesteuert sind, dass deren Köpfe bereits während der Dreh- bzw. Schwenkbewegungen des Drehtellers mit den die aus den Vorformen gerade übernommenen Rohlinge enthaltenden Fertigformen in Wirkverbindung gelangen. Durch diese Unabhängigkeit der Dreh- bzw. Schwenkbewegungen von Drehteller einerseits und Tragarm andererseits können die Köpfe der Tragarme bereits unmittelbar nach der Übergabe der Rohlinge aus den Vorformen in die Fertigformen auf diese aufgesetzt werden, so dass der Ausblas- bzw. Evakuierungsvorgang beginnen kann, bevor die Schwenkung der Fertigformkomplexe um 180° in die Entnahmelage durchgeführt ist. Dies führt zu einer Verringerung der zum Ausformen benötigten Zeit und damit zu einer beträchtlichen Erhöhung der Durchsatzleistung einer derartigen IS-Maschine.

Durch die US-A-1 745 794 ist eine Glasformmaschine mit einer Vorform bekannt, der zwei Fertigformen zugeordnet sind. Die Fertigformen befinden sich auf einem verschiebbar gelagerten Träger und sind über Zahnstangen mit Zahnrädern zu öffnen und zu schliessen. An dem Träger sind seitlich Schwenkachsen angebracht, die mit Tragarmen ausgerüstet sind, welche die Köpfe für das Ausblasen der Rohlinge in den Fertigformen tragen. Die ganze Trägereinheit führt eine hin- und hergehende Bewegung in einem besonderen Rahmen aus, wobei die Zufuhr der Rohlinge aus der Vorform über eine Schwenkeinrichtung erfolgt.

Durch die DE-C-478 498 ist eine Ausführungsform einer Maschine zur Herstellung von Hohlglasartikeln bekannt, bei welcher sowohl die Vorformen als auch die Fertigformen auf einem Drehteller getrennt voneinander angeordnet sind. Insgesamt sind drei Vorformen und sechs Fertigformen vorgesehen. Beide Formenteller, also sowohl der für die Vorformen als auch der für die Fertigformen, sind um zwei getrennte Achsen drehbar, wobei beide Drehteller zusammen eine Maschine bilden.

Vorteilhaft sind die Dreh- bzw. Schwenkachsen hohl ausgebildet und dienen als Verbindungsleitungen zwischen den Köpfen und der Über- bzw. Unterdruckquelle. Die Beaufschlagung mit Druckmittel bzw. Unterdruck ist somit einfach durchführbar. Durch die erfindungsgemässe Ausgestaltung wird eine Reduzierung der für das Ausformen der Rohlinge in den Fertigformen benötigten Zeit ermöglicht, da bereits während der Drehbewegung der Drehteller von ihren Übergabestationen in ihre Entnahmestationen eine Ausformung durchgeführt wird. Die Steuerung kann elektrisch, pneumatisch oder hydraulisch erfolgen.

Ein Ausführungsbeispiel der Erfindung ist an Hand der Zeichnung näher erläutert, und zwar zeigt:

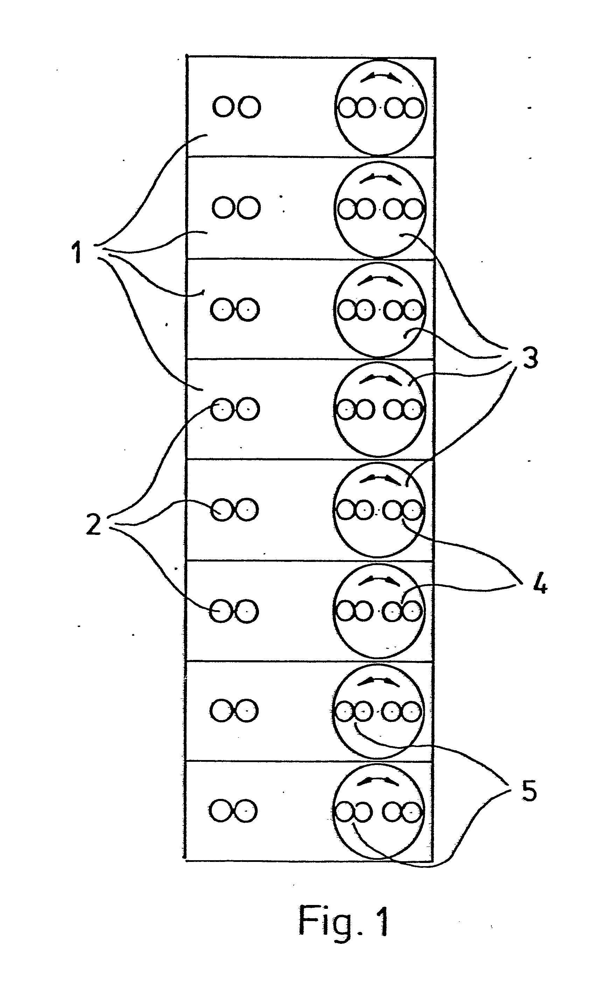

Fig. 1 in schematischer Darstellung eine Draufsicht der Fertigungsstationen einer IS-Maschine,

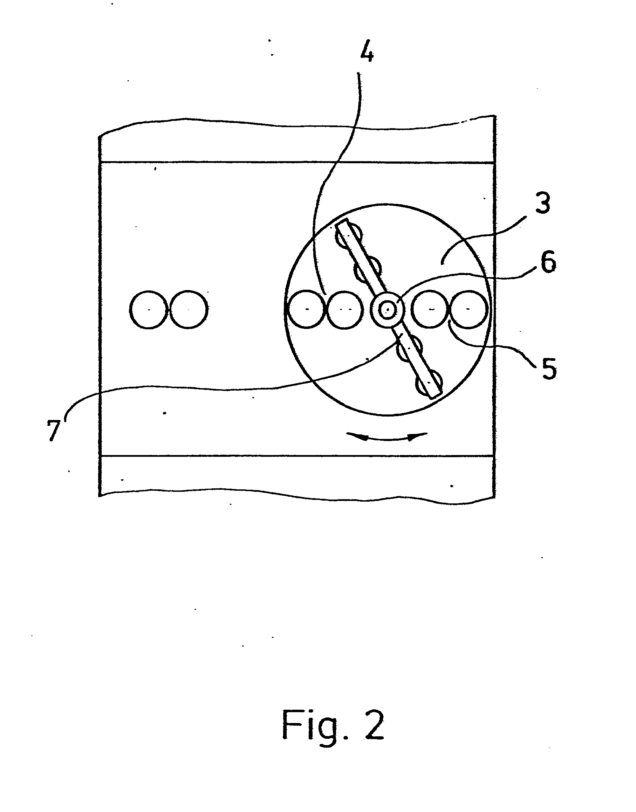

Fig. 2 in vergrösserter Darstellung eine Draufsicht einer Fertigungsstation und

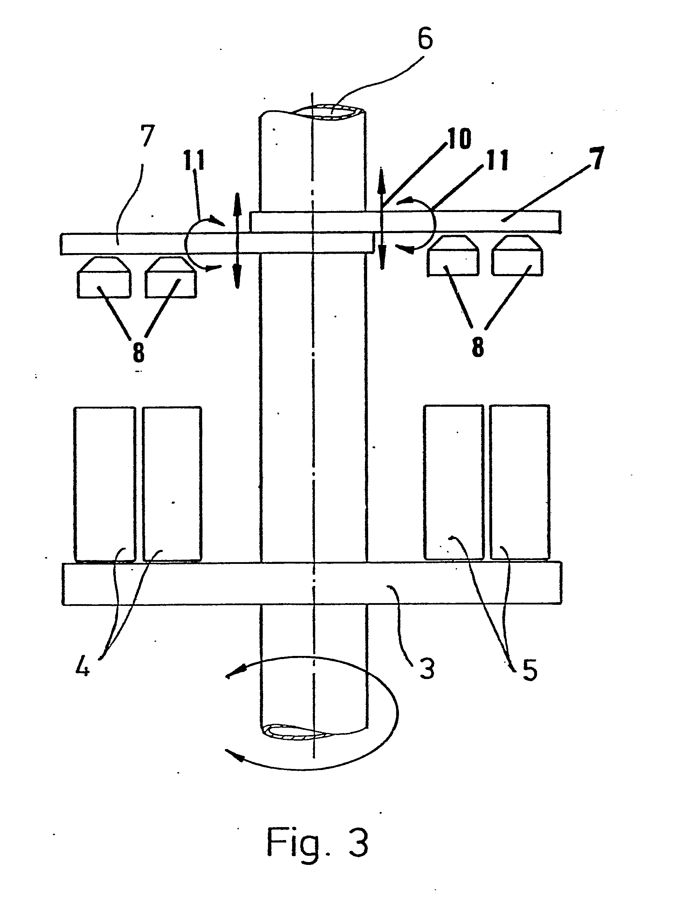

Fig. 3 in geschnittener Darstellung eine Seitenansicht einer Fertigungsstation.

Mit 1 sind die einzelnen Fertigungsstationen einer IS-Maschine bezeichnet, die insgesamt acht derartige Stationen besitzt. Jede der Fertigungsstationen 1 weist ein Paar Vorformen 2 auf sowie einen Drehteller 3, auf dem sich zwei Paare von Fertigformen 4,5 befinden, die gegeneinander um 180° versetzt sind.

Die Dreh- bzw. Schwenkachsen 6 der Drehteller 3 überragen diese nach oben hin. In den Bereichen der frei vorragenden Enden der Achsen 6 sind Tragarme 7 vorgesehen, welche mit Köpfen 8 ausgerüstet sind. Die Tragarme 7 sind, wie durch die Pfeile 10 angedeutet, heb- und senkbar auf den Achsen 6 angeordnet sowie gegenüber diesen frei verschwenkbar, wie die Pfeile 11 zeigen.

Die Achsen 6 sind als Hohlachsen ausgeführt und dienen der Zufuhr von Druckmittel oder zur Erzeugung eines Unterdrucks zwischen den Köpfen 8 und einer Überdruck- oder Unterdruckquelle, was nicht weiter dargestellt ist.

Die Steuerung der Dreh- bzw. Schwenkbewegungen der Tragarme 7 sowie ihrer Heb- und Senkbewegungen erfolgt in der Weise, dass die Köpfe 8 unmittelbar hinter der Übergabestation der Rohlinge in die Fertigformen 4 zu Beginn der Schwenkbewegung um 180° auf diese aufgesetzt werden, so dass bereits während der Schwenkbewegung das Ausformen der Rohlinge in ihre endgültige Form erfolgt. Zur Entnahme der fertig geformten Hohlglasartikel aus den Fertigformen 5 werden die Tragarme 7 aufwärts bewegt und um einen bestimmten Winkel verdreht, so dass die Fertigformen 4 in der Übergabeposition als auch die Fertigformen 5 in der Entnahmeposition frei zugänglich sind.

Die Drehteller können eine Schwenkbewegung jeweils um 180° ausführen, als auch eine absatzweise erfolgende Drehbewegung in einer Richtung, jeweils um 180°. In gleicher Weise erfolgt die Schwenk- bzw. Drehbewegung der Tragarme 7.

### Patentansprüche

1. Vorrichtung zur Herstellung von Hohlglasartikeln mit mehreren, linear hintereinander angeordneten Fertigungsstationen (1), sog. IS-Maschine, die jeweils eine oder mehrere feststehende Vorformen (2) aufweisen, denen jeweils zwei Fertigformen (4, 5) zugeordnet sind, welche sich auf einem Drehteller (3) um 180° zueinander versetzt befinden und abwechselnd in eine Übernahmeposition für den Rohling (Külbel) und eine Entnahmeposition für den fertigen Formling bewegbar sind, und bei der oberhalb jeder Fertigform (4, 5) ein mit einer Über- oder Unterdruckquelle in Verbindung stehender, an einem Tragarm (7) befestigter heb- und senkbarer Kopf (8) angeordnet ist, wobei die Drehachse (6) des Drehtellers (3) diese nach oben überragt und in dem Bereich ihres frei vorragenden Endes ein oder zwei Tragarm(e) (7) vorgesehen ist bzw. sind, welche(r) auf der Drehachse heb- und senkbar sowie drehbar angebracht ist bzw. sind, wobei die Dreh- bzw. Schwenkbewegungen der Tragarme (7) und deren Heb- und Senkbewegungen derart gesteuert sind, dass deren Köpfe (8) bereits während der Dreh- bzw. Schwenkbewegungen des Drehtellers (3) mit den die aus den Vorformen (2) gerade übernommenen Rohlinge enthaltenden Fertigformen (4) in Wirkverbindung gelangen.

2. Vorrichtung nach Anspruch 1, dadurch gekennzeichnet, dass die Dreh- bzw. Schwenkachsen (6) hohl ausgebildet sind und als Verbindungsleitungen zwischen den Köpfen (8) und der Über- bzw. Unterdruckquelle dienen.

### Claims

1. Apparatus for manufacturing hollow glass articles and having a plurality of linearly serially-disposed production stations (1), a socalled IS machine, having in each case one or a plurality of fixed premoulds (2), with which in each case two finishing moulds (4, 5) are associated, the latter being disposed on a turntable (3) in an arrangement whereby they are staggered by 180° in respect of each other and can be moved alternately into a blank (parison) take-over position and a position for removal of the finished moulding, and wherein there is above each finishing mould (4, 5) and communicating with an over-pressure or a negative pressure source and mounted on a support arm (7) a head (8) which can be raised and lowered, the axis of rotation (6) of the turntable (3) projecting upwardly beyond this latter and in that there is/are disposed in the region of its freely projecting end one or two support arm(s) (7), which is/are rotatably as well as raisably and lowerably disposed on the pivot axis, the rotary or pivoting movements of the support arms (7) and the raising and lowering movements thereof being so controlled that their heads (8) move into operative connection with the finish moulds (4) containing the blanks which have just been taken over from the pre-moulds (2) even during the rotary or pivoting motions of the turntable (3).

2. Apparatus according to Claim 1, characterised in that the rotary or pivoting axes (6) are of hollow construction and serve as connecting lines between the heads (8) and the source of over-pressure or negative pressure.

### Revendications

1. Dispositif pour la production d'articles de verre creux, comportant plusieurs postes de fabrication (1), dits machine IS, qui sont disposés en ligne les uns derrière les autres et comportent respectivement un ou plusieurs moules de préformage fixes (2) à chacun desquels sont respectivement associés deux moules de formage final (4, 5) qui se trouvent mutuellement décalés de 180° sur un plateau rotatif (3) et sont amenés alternativement à une position de transfert pour l'ébauche (paraison) et à une position d'enlèvement pour la pièce moulée terminée, et dans lequel au-dessus de chaque moule de formage final (4, 5) est installée une tête (8) raccordée à une source de surpression ou de dépression, fixée sur un bras support (7) et déplaçable en hauteur, l'axe de rotation (6) du plateau rotatif (3) faisant saillie au-dessus de ceux-ci, et comportant, dans la zone de son extrémité libre en saillie, un ou deux bras support(s) (7) qui est ou sont monté(s) déplaçables en hauteur ainsi que rotatifs sur l'axe de rotation, les mouvements de rotation ou de pivotement des bras supports (7) et leurs déplacements en hauteur étant commandés de façon que leurs têtes (8), dès les mouvements de rotation ou de pivotement du plateau rotatif (3), commencent déjà à coopérer avec les moules de formage final (4) contenant les ébauches juste transférées des moules de préformage (2).

2. Dispositif selon la revendication 1, caractérisé par le fait que les axes de rotation ou de pivotement (6) sont réalisés creux et servent de conduites de raccordement entre les têtes (8) et la source de surpression ou de dépression.

Fig. 1

**Fig. 2**

Fig. 3